# EUROPÄISCHE PATENTSCHRIFT

(11) **EP 2 671 622 B1**
(45) Veröffentlichungstag und Bekanntmachung des Hinweises auf die Patenterteilung: **19.02.2020**
(21) Anmeldenummer: 13170278.9
(22) Anmeldetag: 03.06.2013
(51) Int. Cl.: B01D 25/176, B01D 25/21, B01D 25/28

(54) **MEMBRANPLATTE, FILTERPLATTE UND FILTERPRESSE**
Membran plate, filter plate and filter press
Plaque à membrane, plaque à filtre et presse à filtre

(30) Priorität: 06.06.2012 DE 102012209591
(43) Veröffentlichungstag der Anmeldung: 11.12.2013
(73) Patentinhaber: Strassburger Filter GmbH & Co. KG, 67593 Westhofen /Rheinhessen (DE)
(72) Erfinder: SEBASTIAN, Jürgen, 67593 Westhofen (DE)
(74) Vertreter: Mehler Achler

(56) Entgegenhaltungen:
- DE-B3- 10 252 922
- DE-U1-202007 008 649
- US-B1- 6 387 282

## Beschreibung

Die Erfindung betrifft eine Membranplatte, eine Filterplatte sowie eine Filterpresse mit Membranplatten, Filterplatten und Filterrahmen und eine Verwendung der Filterpresse.

Eine Filterpresse ist eine Filtervorrichtung, wobei man so genannte Rahmenfilterpressen, Kammerfilterpressen und Membranfilterpressen unterscheidet. Hierbei handelt es sich um die gleiche Ausführung des Filterpressengestells, das jedoch mit unterschiedlichen Plattenarten bestückt ist (siehe z. B. Horst Gasper "Handbuch der industriellen Fest/Flüssig-Filtration", Hüthig-Verlag Heidelberg 1990, S. 104-111).

Aus diesem Stand der Technik sind Membranfilterpressen mit austauschbaren Membranen für die Festflüssig-Trennung bekannt. Derartige Filterpressen sind in vielfältigen Anwendungsbereichen, beispielsweise Abwasser, Chemie, Lebensmittel, Metallurgie, Pharmazie usw. einsetzbar. Kammerfilterpressen weisen Filtrationskammern auf, welche durch speziell geformte Platten gebildet werden. Dabei ist jede Kammer mindestens einseitig mit einer Membran versehen. Es kann so jede zweite Platte als beidseitig mit Membran belegte Membranplatte ausgestaltet sein. Strömt Unfiltrat unter Druck in die geschlossene Filterpresse ein, so baut sich auf jedem Filtermittel ein Filterkuchen auf, bis die beiden Kuchenschichten zusammenwachsen und die Kammern ganz mit Feststoff gefüllt sind. An diesen ersten Schritt der Druckfiltration schließt sich als zweiter Schritt die Pressfiltration an.

Die elastischen Membranen werden bei der Pressfiltration mit einem Druckmedium aufgebläht, so dass sie sich ausdehnen und den Kuchenraum verengen. Dabei wird der dort eingebettete Kuchen komprimiert, wodurch die Restfeuchte in den Hohlräumen des Kuchens weiter verringert wird. Durch den Einsatz der Pressfiltration können extrem hohe Filtrationsdrücke während der Druckfiltration vermieden werden, was zu einer Einsparung von Kosten führt.

Die DE 102 21 061 B4 offenbart eine Plattenanordnung, bei der abwechselnd Filterplatten und Membranplatten angeordnet sind. Die Filterplatte weist auf beiden Seiten jeweils ein Filtertuch auf, welches jeweils in einer Aussparung des Grundkörpers der Filterplatte befestigt ist. Die Membranplatte weist auf beiden Seiten jeweils eine Membran auf, die in jeweils einer Aussparung auf beiden Seiten eines Grundkörpers der Membranplatte befestigt ist. Bei der Filterpresse ist zwischen dem einen Filtertuch der Filterplatte und der Membran der Membranplatte eine Filterkammer ausgebildet. Zwischen der Membran und dem Grundkörper der Membranplatte ist eine Druckkammer ausgebildet.

Über die Membranplatte kann beidseitig beim Zusammenbau der Filterpresse jeweils ein weiteres Filtertuch gelegt werden.

Die Filtertücher erstrecken sich jeweils bis zum Rand der Filter- und der Membranplatten und werden dort beim Schließen der Filterpresse gegeneinander gedrückt und auf diese Weise gehalten. Dadurch, dass die Filtertücher am Rand der Platten enden, besteht die Gefahr, dass Flüssigkeit aus diesem Bereich heraustropft, wenn nicht zusätzliche Dichtelemente vorgesehen werden.

Zum Reinigen der Filterpresse wird die Filterpresse geöffnet und die Filterkuchen nach unten ausgetragen. Die einzelnen Filter- und Membranplatten werden entnommen und in einer außerhalb der Filterpresse angeordneten Reinigungsvorrichtung gereinigt. Beim Öffnen der Filterpresse müssen die Filtertücher separat entnommen und gereinigt werden.

Bei der Verwendung von Filterschichten anstelle von Filtertüchern müssen die Filterschichten entsorgt und durch neue Filterschichten ersetzt werden.

Aus der DE 102 52 922 B3 ist eine Membranfilterpresse bekannt, bei der zur Fixierung der Membran an der Grundplatte eine im Querschnitt schwalbenschwanzförmige Aufnahmeausnehmung bzw. Nut angeordnet ist. Die Membran weist einen randständigen Ringwulst auf, der eine der Nut im Wesentlichen entsprechende Querschnittsform hat und der in der Nut formschlüssig einliegt. Das Einsetzen der Membran in die Nut erfolgt dabei unter elastischer Verformung der Membran, die aus einem gummiähnlichen oder aus einem elastischen Kunststoff besteht. In den Ringwulst ist eine Fixiernut eingelassen, die sich zu ihrem Nutgrund hin erweitert. In dieser Fixiernut wird das Filtertuch mittels einer Fixierleiste befestigt.

Aus der DE 20 2007 008 649 U1 ist ein Filterelement für Kammer- und Membranfilter oder dergleichen bekannt. Das Filterelement weist eine Trägerplatte auf, die zur Fixierung eines Filtertuchs eine Montagenut besitzt, in die ein Hohlkörperprofil formschlüssig eingesetzt wird. Dieses Hohlkörperprofil weist einen fahnenförmig abstehenden Saum auf, an dem das Filtertuch befestigt wird und beispielsweise angegossen, angespritzt, angeklebt, angeschweißt und/oder angenäht ist.

Die US 6,387,282 B1 offenbart eine Filterpresse mit Membranfilterplatten, die mit einem Filtertuch versehen sind. Am Rand des Filtertuchs ist ein Stab eingearbeitet, der zusammen mit dem Filtertuch in eine Nut der Platte eingeklemmt wird.

Aufgabe der Erfindung ist es, eine Filterpresse mit Membranplatten, Filterplatten und Filterrahmen zu schaffen, die kostengünstiger ist und mit geringerem Aufwand betrieben werden kann. Es ist auch Aufgabe der Erfindung, entsprechende Membranplatten und Filterplatten als Bestandteile der Filterpresse zur Verfügung zu stellen.

Diese Aufgabe wird mit einer Membranplatte gemäß Anspruch 1, einer Filterplatte gemäß Anspruch 4 sowie mit einer Filterpresse gemäß Anspruch 13 gelöst.

Die Membranplatte ist dadurch gekennzeichnet, dass sie auf den beiden Seitenflächen über der Membran jeweils mit einem Filterelement bestückt ist, wobei die Membranplatte beabstandet zum Rand Halteelemente aufweist, an denen die Filterelemente lösbar befestigt sind, wobei die Halteelemente unmittelbar am Grundkörper der Membranplatte angeordnet sind.

Auch die Filterplatte ist dadurch gekennzeichnet, dass sie beabstandet zum Rand Halteelemente aufweist, an denen die Filterelemente lösbar befestigt sind, wobei die Halteelemente unmittelbar am Grundkörper der Filterplatte angeordnet sind und gegenüber der Seitenfläche des Grundkörpers des Platte vorstehen und wobei sich die Halteelemente senkrecht zur Ebene E, E' der Platte erstrecken und wobei die Ebenen E, E' in der Seitenfläche des Grundkörpers liegen, die sich an den Rand der Platte anschließen.

Es ist dadurch möglich, die Filterplatten und die Membranplatten zusammen mit den Filterelementen der Filterpresse zu entnehmen und der Reinigungsvorrichtung zuzuführen. Eine Trennung von Platten und Filterelement ist nicht erforderlich, so dass sowohl der Reinigungsvorgang vereinfacht als auch die Demontage und Montage der Filter- und Membranplatten deutlich verkürzt werden können. Der Vorteil der Filter- und Membranplatten besteht darin, dass die Platten mit den Filtertüchern gereinigt werden können, die Filtertücher mehrfach verwendet werden können und der Zusammenbau der Filterpresse zeitsparender durchgeführt werden kann, weil die Filtertücher nicht separat eingebaut und befestigt werden müssen.

Unter "Platten" werden sowohl Filterplatten als auch Membranplatten verstanden.

Die Halteelemente sind an den Seitenflächen der Platten im Randbereich verteilt angeordnet, so dass das Filterelement ringsum gehalten wird.

Vorzugsweise ist das Filterelement ein Filtertuch. Filtertücher können mittels der Halteelemente in einem gespannten Zustand an der betreffenden Platte befestigt werden.

Vorzugsweise stehen die Halteelemente gegenüber der Seitenfläche des Grundkörpers der Platte vor. Die Halteelemente erstrecken sich vorzugsweise senkrecht zur Ebene E, E' der betreffenden Platte. Die Ebenen E, E' liegen in den Seitenflächen des Grundkörpers, die sich an den Rand der betreffenden Platte anschließen. Der Vorteil besteht darin, dass das Filtertuch bzw. Filterelement auf einfache Weise in die Halteelemente vorzugsweise eingehängt werden kann.

Die Filterelemente weisen vorzugsweise Löcher auf, in die die Halteelemente einsteckbar sind. Die Demontage der verbrauchten Filterelemente und die Montage neuer Filterelemente werden dadurch erleichtert.

Die Halteelemente sind vorzugsweise Haltezapfen, Stifte oder Noppen. Solche Halteelemente können vorgefertigt und anschließend in vorbereitete Bohrungen im Grundkörper der Platte eingesetzt werden.

Der Haltezapfen weist vorzugsweise einen kegelstumpfförmigen Abschnitt auf. Der kegelstumpfförmige Abschnitt verjüngt sich zum freien Ende des Haltezapfens, was das Einführen des Haltezapfens in das Loch des Filterelementes erleichtert.

Vorzugsweise ist am Haltezapfen zwischen dem kegelstumpfförmigen Abschnitt und der Seitenfläche des Grundkörpers der Platte eine Hinterschneidung vorgesehen. Nach dem Einsetzen des Filterelementes hintergreift der Lochrand des Filterelementes die Hinterschneidung, so dass das Filterelement sicher gehalten wird und sich auch beim Reinigungsvorgang nicht von der Membran- bzw. der Filterplatte lösen kann.

Die Hinterschneidung wird vorzugsweise durch eine Ringnut im Haltezapfen gebildet. Eine solche umlaufende Hinterschneidung verbessert die Fixierung des Filterelementes.

Der Zuschnitt der Filterelemente ist vorzugsweise kleiner als die Plattenabmessungen, so dass der Rand der Filterelemente gegenüber dem Rand der Platte zurückversetzt angeordnet ist. Dies bedeutet, dass die Fläche des Filterelementes kleiner ist als die Seitenfläche der betreffenden Platte. Der Zuschnitt der Membran, die aus einem elastischen Material, wie z. B. Gummi besteht, ist geringer als der Zuschnitt des Filterelementes, so dass das Filterelement die Membran vollständig abdeckt.

Dadurch, dass der Zuschnitt der Filterelemente kleiner ist als die Plattenabmessungen, reicht das Filterelement nicht bis zum Rand der Platte, wodurch Leckagen vermieden werden. Beim Zusammenbau können die Randbereiche der Grundkörper der Platten gegeneinander gedrückt werden. Zusätzliche Reinigungsarbeiten bzw. das Auffangen eventuell austropfender Flüssigkeit entfallen.

Vorzugsweise weisen die Grundkörper der Platten in den Seitenflächen eine umlaufende Ringnut auf. Diese Ringnut ist beabstandet zum Rand der Platte angeordnet und auf den Zuschnitt des Filterelementes ausgelegt.

Das Filterelement ist vorzugsweise derart dimensioniert, dass der Rand des Filterelementes in der Ringnut liegt. Dadurch wird die Abdichtung im Randbereich der Platten nochmals verbessert, ohne dass zusätzliche Dichtelemente eingesetzt werden müssen. Insbesondere bei der Blutfiltration ist es aus hygienischen Gründen von Vorteil, möglichst wenige bzw. gar keine Dichtelemente zu verwenden.

Die Platten sind derart ausgeführt, dass die Filterelemente mit einer Dicke D nur geringfügig gegenüber den Ebenen E, E' vorstehen. Zwischen einer Ausnehmung für die Membrane und einer Ringnut, in der der Rand des Filterelementes liegt, ist der Grundkörper der Platte um ein Maß zurückversetzt, das kleiner gleich der Dicke D des Filterelementes entspricht.

Die erfindungsgemäße Filterpresse weist eine Mehrzahl von parallel zueinander angeordneten Filterplatten, Filterrahmen und Membranplatten auf, wobei die Filterplatten und die Membranplatten auf beiden Seiten mit den Filterelementen bestückt sind und wobei die Platten jeweils einen Grundkörper aufweisen, an dem unmittelbar und beabstandet zum Rand Halteelemente befestigt sind, an denen die Filterelemente lösbar befestigt sind und gegenüber der Seitenfläche des Grundkörpers der Platte vorstehen und wobei sich die Halteelemente senkrecht zur Ebene E, E' der Platte erstrecken und wobei die Ebenen E, E' in der Seitenfläche des Grundkörpers liegen, die sich an den Rand der Platte anschließen.

Die Plattenanordnung sieht vorzusweise folgende Reihenfolge vor: ...Filterplatte, filterrahmen, Membranplatte, Filterrahmen, Filterplatte usw.... Es handelt sich um eine periodische Anordnung, wobei die Periodizität aus der Reihenfolge Filterplatte, Filterrahmen, Membranplatte, Filterrahmen besteht.

Durch die in den Platten und Rahmen vorgesehenen Augen wird Unfiltrat zugeführt und Filtrat abgeführt. Durch die Filterrahmen wird das Unfiltrat in die betreffenden Unfiltraträume eingeleitet und von dort durch die an beiden Seiten des Unfiltratraums vorgesehenen Filterelemente gepresst. Das Filtrat wird sowohl über die Filterplatten als auch über die Membranplatten abgeführt und über die betreffenden Augen in den Platten ausgeleitet.

Vorzugsweise weisen die Filterrahmen beabstandet zum Rand Löcher auf. Diese Löcher sind über den Randbereich ringsum verteilt und dienen dazu, die Enden der Halteelemente der Filterplatten und der Membranplatten beim Zusammenbau der Filterpresse aufzunehmen.

Bei der kegelstumpfförmigen Ausgestaltung der Haltezapfen ist es erforderlich, dass der kegelstumpfförmige Abschnitt in den Löchern der Filterrahmen aufgenommen wird.

Die Löcher sind vorzugsweise Durchgangslöcher, so dass von beiden Seiten die Halteelemente in die Löcher eingreifen können.

Der Zuschnitt der Filterelemente ist vorzugsweise so gewählt, dass er sich auch über den Bereich der Augen der Platten erstreckt. Die Augen sind vorzugsweise mit einem Ringwulst versehen, der ebenfalls eine Hinterschneidung vorzugsweise in Form einer Ringnut aufweist. Die Filterelemente weisen entsprechende Löcher in diesem Bereich auf, so dass die Filterelemente auch im Bereich der Augen gehalten werden. Dadurch wird die Befestigung der Filterelemente an den Platten nochmals verbessert.

Vorteilhafterweise wird die Filterpresse für die Filtration von Blutplasma und für die Herstellung von pharmazeutischen Produkten eingesetzt.

Beispielhafte Ausführungsformen der Erfindung werden nachfolgend anhand der Figuren näher erläutert.

Es zeigen:
- Figur 1: eine perspektivische Darstellung einer Filterpresse,
- Figur 2: einen Ausschnitt aus der Filterplattenanordnung gemäß der Figur 1, teilweise im Vertikalschnitt und teilweise in Seitenansicht,
- Figur 3: der in Figur 2 mit X gekennzeichnete Bereich in vergrößerter Darstellung,
- Figur 4: der in Figur 3 mit Y gekennzeichnete Bereich in vergrößerter Darstellung,
- Figur 5: eine perspektivische Draufsicht auf eine Membranplatte mit teilweise umgeklapptem Filtertuch,
- Figur 6: eine Draufsicht auf eine Membranplatte ohne Filterelement,
- Figur 7: einen Schnitt durch die in Figur 6 gezeigte Membranplatte längs der Linie A-A in vergrößerter Darstellung und mit Filterelement,
- Figur 8: eine Draufsicht auf eine Filterplatte ohne Filterelement,
- Figur 9: einen Schnitt längs der Linie B-B in Figur 8 in vergrößerter Darstellung mit Filterelement,
- Figur 10: eine Draufsicht auf einen Filterrahmen, und
- Figur 11: eine vergrößerte Darstellung der linken unteren Ecke des Filterrahmens gemäß der Figur 10.

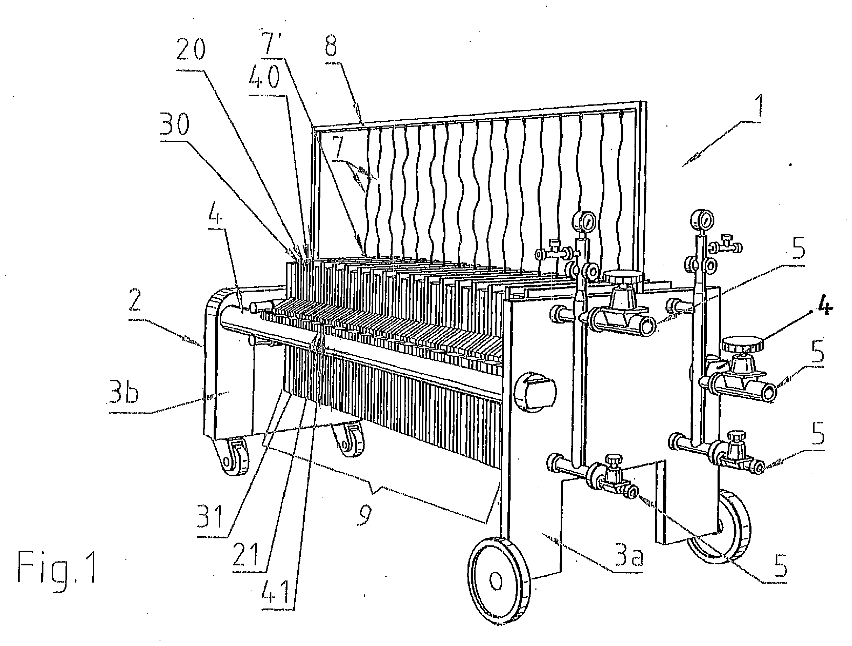

In der Figur 1 ist eine Filterpresse 1 perspektivisch dargestellt. Die Filterpresse 1 besitzt ein fahrbares Gestell 2, das an den beiden Enden jeweils eine Gestellplatte 3a, 3b aufweist, die über zwei Auflagebalken 4 miteinander verbunden sind. Auf diesen Auflagebalken 4 werden zur Bildung einer Plattenanordnung 9 die Filterplatten 40, die Filterrahmen 20 und die Membranplatten 30 in einer vorgesehenen Reihenfolge mit ihren Haltenasen 21, 31, 41 aufgehängt und über eine Pressvorrichtung gegeneinander dichtend verpresst. Die Membranplatten 30 besitzen Druckluftanschlüsse 7', an denen Schläuche 7 befestigt sind, die über eine Stange 8 zu einer gemeinsamen Druckluftversorgung (nicht dargestellt) geführt werden.

Im vorderen Teil des Gestells sind mehrere Anschlüsse 5 für Unfiltratzulauf und Filtratablauf vorgesehen, die die mit den im Innern der Plattenanordnung 9 liegenden Filtrat- und Unfiltratkanäle verbunden sind. Zur Bildung dieser Filtrat- und Unfiltratkanäle sind in den Platten 30, 40 und im Filterrahmen 20 an den Eckpunkten entsprechend dimensionierte Augen 28, 38, 48 vorgesehen.

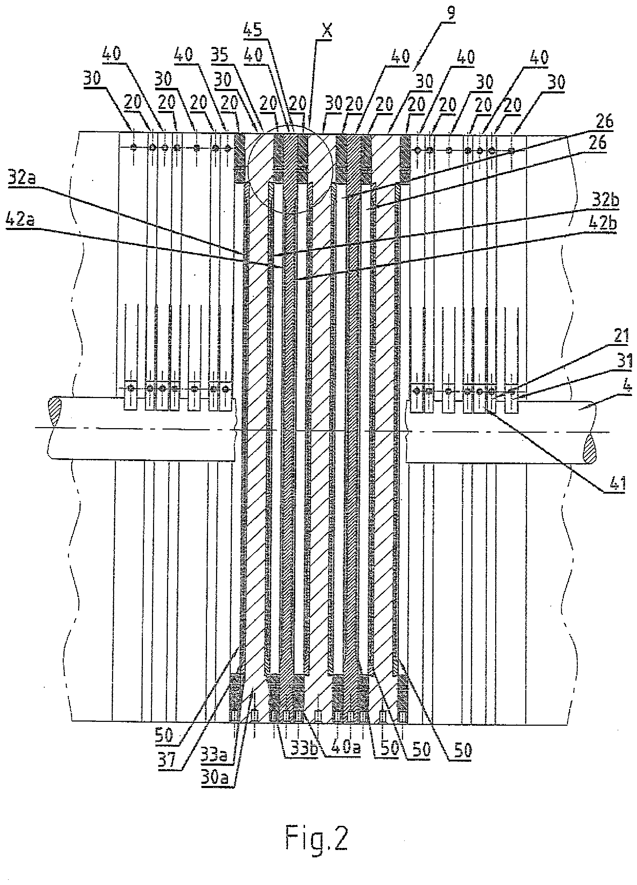

In der Figur 2 ist ein Ausschnitt einer Plattenanordnung 9 vergrößert und teilweise im Schnitt dargestellt. Es ist zu sehen, dass Membranplatten 30 und Filterplatten 40 abwechselnd angeordnet sind, wobei jeweils zwischen den Platten 30, 40 ein Filterrahmen 20 angeordnet ist.

Die Membranplatte 30 besitzt einen Grundkörper 30a, der an seinen beiden Seitenflächen 32a, 32b jeweils eine Ausnehmung 37 aufweist, in die die Membrane 33a, 33b eingesetzt sind. Der Grundkörper 30a der Membranplatte 30 besteht vorzugsweise aus Kunststoff, so dass die Membrane 33a, 33b dort eingeschweißt werden können.

Über die Membrane 33a, 33b sind Filterelemente 50 in Form von Filtertüchern gespannt, wobei der Zuschnitt der Filtertücher kleiner ist als die Abmessungen der Membranplatte 30. Dies gilt auch für die Filterplatte 40, die an ihren beiden Seitenflächen 42a, 42b ebenfalls ein Filtertuch 50 trägt.

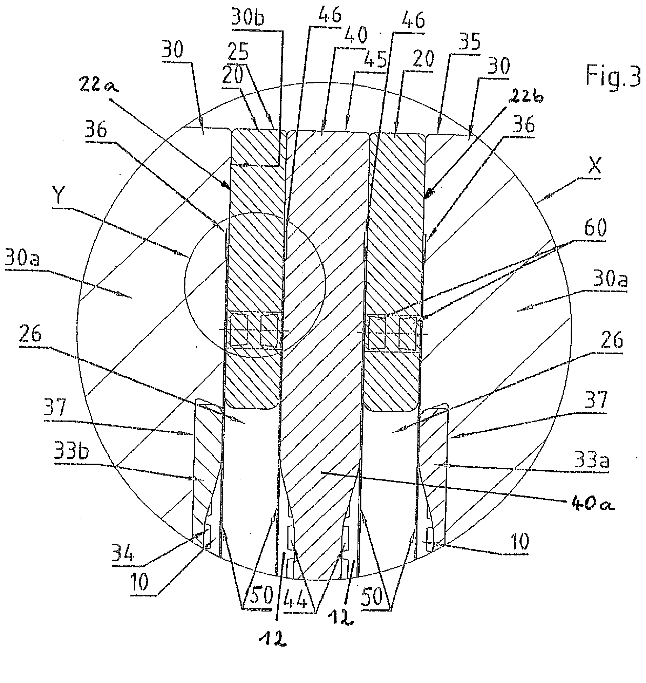

Aufgrund der geringeren Abmessung der Filtertücher 50 stehen diese gegenüber den Rändern 35, 45 von Membranplatte 30 und Filterplatte 40 nicht vor. Die Einzelheiten werden im Zusammenhang mit den Figuren 3 bis 7 erläutert, wobei die Figur 3 eine vergrößerte Darstellung des markierten Ausschnitts X zeigt.

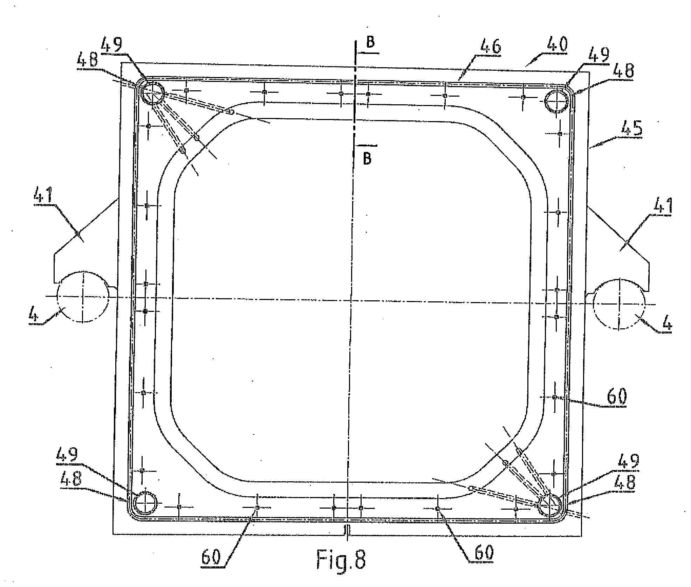

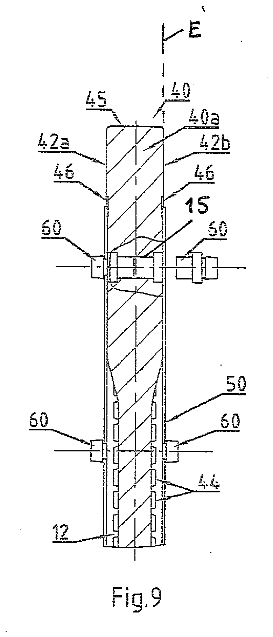

Die Einzelheiten der Filterplatten 40 werden im Zusammenhang mit den Figuren 8 und 9 erläutert.

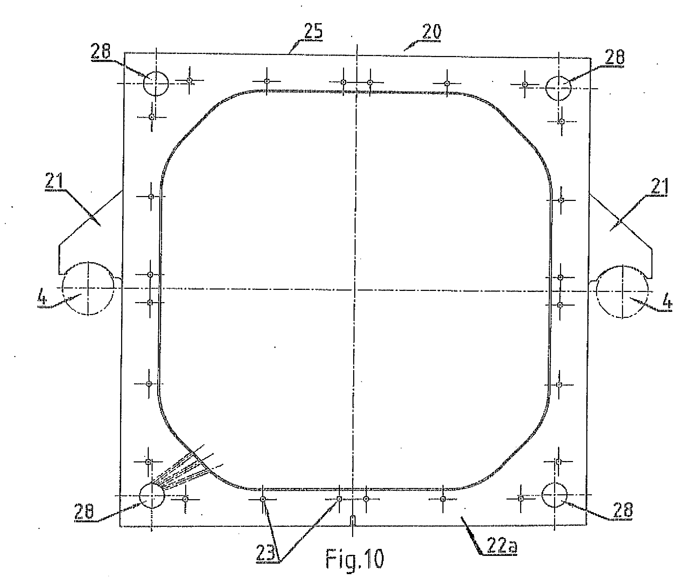

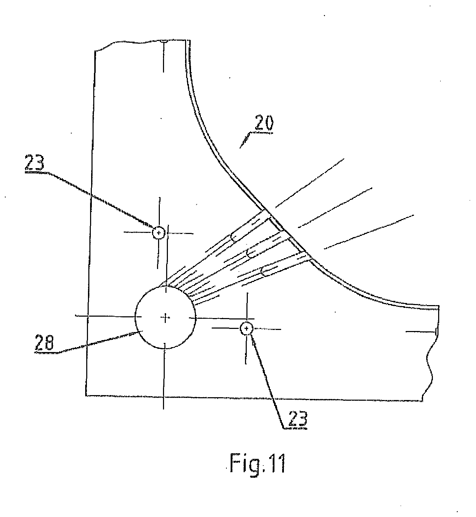

Zwischen den Membran- und Filterplatten 30, 40 sind jeweils Filterrahmen 20 angeordnet, die den Unfiltratraum 26 begrenzen und im Einzelnen im Zusammenhang mit den Figuren 10 und 11 beschrieben werden.

In der Figur 3 ist der in Figur 2 markierte Bereich X vergrößert dargestellt, der die Anordnung Membranplatte 30 mit Grundkörper 30a, Filterrahmen 20, Filterplatte 40 mit Grundkörper 40a, Filterrahmen 20 und eine weitere Membranplatte 30 zeigt.

Die Membrane 33a und 33b der Membranplatte 30 weisen in ihrem Randbereich eine Dicke auf, die der Tiefe der Ausnehmung 37 des Grundkörpers 30a der Membranplatte 30 entspricht. Der Querschnitt der Membran 33a, 33b verjüngt sich vom Rand nach innen, so dass zwischen der Oberfläche der Membrane 33a, 33b, die mit Noppen 34 versehen ist, und dem Filterelement 50 ein Filtratraum 10 geschaffen wird, in dem das Filtrat gesammelt und dieses dann durch entsprechende Kanäle (nicht dargestellt) in der Membranplatte 30 über die Augen 38 abgeführt wird.

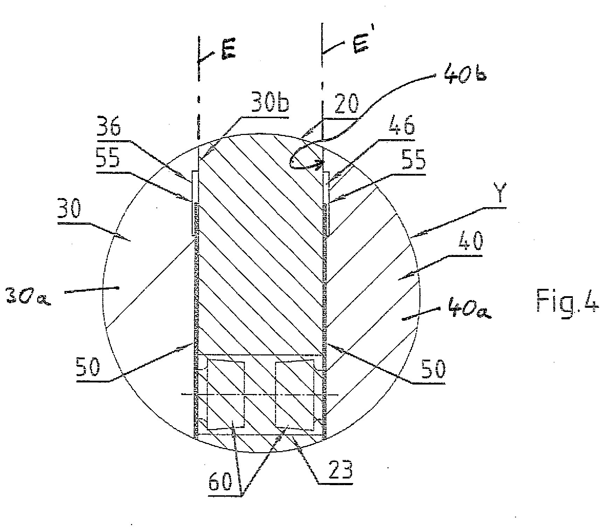

Die Membranplatte 30 weist beabstandet zum Rand 35 eine Ringnut 36 auf, in der das Filterelement 50 endet. Der Rand 55 des Filterelements 50 liegt in der Mitte der Nut 36, wobei der Begriff "Mitte" sich auf die Breite der Nut 36 bezieht (s. Fig. 4).

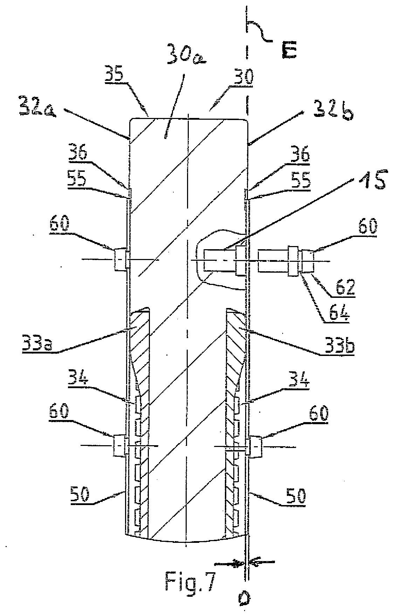

Wie in Figur 3 und insbesondere in der Figur 4 zu sehen ist, liegt in dem montierten Zustand die Außenfläche des Filterelementes 50 in der Ebene E der Randfläche 30b des Grundkörpers 30a der Membranplatte 30. Zwischen der Ausnehmung 37 für die Membrane 33a, 33b und der Ringnut 36 ist die Außenfläche des Grundkörpers 30a der Membranplatte 30 um ein Maß zurückversetzt, das kleiner gleich der Dicke D des Filterelementes 50 entspricht. Bei der Montage wird das Filterelement nur geringfügig verpresst. In der Figur 7, die die Membranplatte vor dem Einbau zeigt, ist zu sehen, dass das Filterelement 50 mit etwa der Hälfte der Dicke des Filterelementes, gegenüber der Ebene E vorsteht. Dadurch wird gewährleistet, dass das Filterelement 50 nicht aufträgt und der Filterrahmen 20 und die Randfläche 30b der Membranplatte 30 unmittelbar aufeinanderliegen und zusammengepresst werden können, so dass hier eine optimale Abdichtung erreicht wird. Die Ringnut 36 ist bezogen auf die Randfläche 30b tiefer als die Dicke des Filterelements 50, was den Vorteil hat, dass der Rand 55 des Filterelements 50 nicht verpresst wird. Eventuell aus dem Filterelement 50 austretende Flüssigkeit wird in der Ringnut 36 aufgefangen.

Die Filterplatte 40 ist bezüglich der Ringnut 46 im Grundkörper 40a und bezüglich der Anordnung des Filterelementes 50 in gleicher Weise ausgebildet wie die Membranplatte 30. Die Außenfläche des Filterelementes 50 liegt im montierten Zustand ebenfalls in einer Ebene E' der Randfläche 40b des Grundkörpers 40a. In dem Bereich des Grundkörpers 40a, der im Wesentlichen dem Unfiltratraum 26 des Filterrahmens 20 gegenüberliegt, ist die Dicke des Grundkörpers 40 verringert und mit Noppen 44 versehen. Zwischen dem Grundkörper 40a der Filterplatte 40 und dem Filterelement 50 wird ebenfalls ein Freiraum, d. h. ein Filtratraum 12 gebildet, in dem das Filtrat gesammelt und anschließend abgeführt wird.

Die Filterrahmen 20 weisen in den Seitenflächen 22a,b Löcher 23 in Form von Durchgangsbohrungen 23 auf, die nachfolgend noch eingehender beschrieben werden und in die die Halteelemente 60 von Membranplatte 30 und Filterplatte 40 eingreifen (gestrichelte Darstellung in Fig. 4).

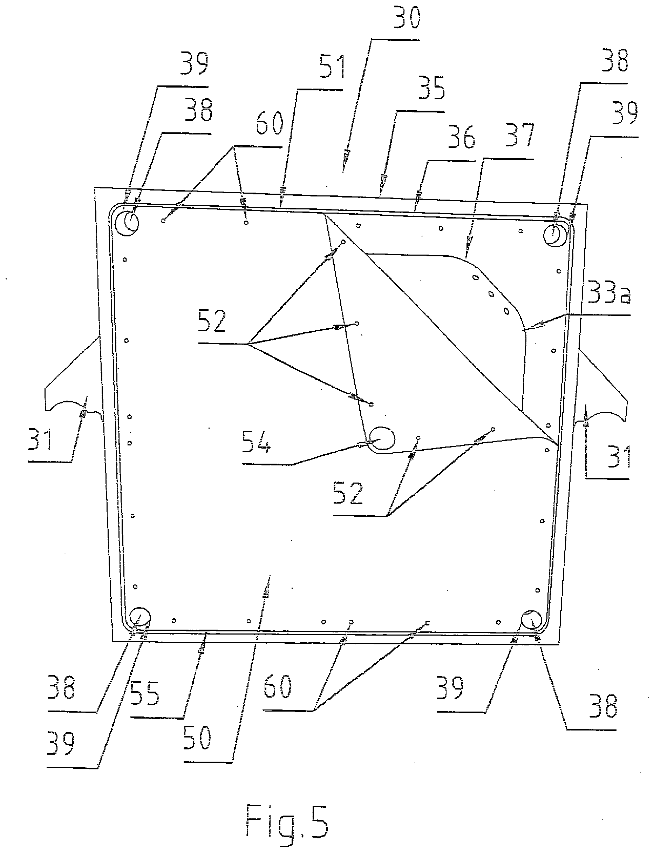

In der Figur 5 ist eine Draufsicht (in perspektivischer Darstellung) auf eine Membranplatte 30 dargestellt, so dass die Halteelemente 60, die als Haltezapfen (s. Fig. 7) ausgeführt sind, zu sehen sind. Diese Halteelemente 60, die in Fig. 5 nur schematisch dargestellt sind, sind beabstandet zum Rand 35 angeordnet und liegen im Wesentlichen im Bereich der Verbindungslinie der Augen 38, die sich in den Eckbereichen der Membranplatte 30 befinden.

Das Filtertuch 50, das teilweise umgeklappt ist, weist entsprechende Löcher 52 auf, durch die die Haltezapfen 60 gesteckt werden können. Es ist ferner zu sehen, dass die Membran 33a in einer Ausnehmung 37 liegt, wobei der Zuschnitt der Membran 33a kleiner ist als der Zuschnitt des Filtertuchs 50.

Die Augen 38 sind mit Ringwülsten 39 versehen, die ebenfalls einen Hinterschnitt vorzugsweise in Form einer Ringnut aufweisen, was in Figur 5 nicht zu sehen ist. Das Filtertuch 50 weist in den Eckbereichen entsprechend große Löcher 54 auf, die über die Ringwülste 39 geschoben werden können, so dass das Filtertuch an den Eckbereichen ebenfalls lösbar befestigt werden kann.

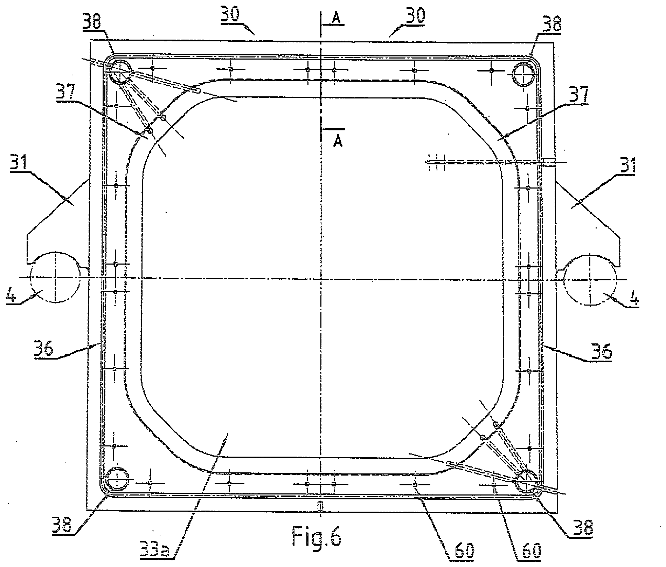

In der Figur 6 ist die Draufsicht auf eine Membranplatte 30 dargestellt, wobei das Filtertuch 50 nicht dargestellt ist.

In der Figur 7 ist ein Schnitt längs der Linie A-A durch Figur 6 dargestellt, wobei dieser Bereich vergrößert dargestellt ist. Die Halteelemente 60 sind Haltezapfen, die an den beiden Seitenflächen 32a, 32b des Grundkörpers 30a angeordnet sind und die einen kegelstumpfförmigen Abschnitt 62 aufweisen, der sich am freien Ende des Haltezapfens 60 befindet. Am unteren Ende des kegelstumpfförmigen Abschnitts 62 befindet sich eine Hinterschneidung 64 in Form einer Ringnut. Die Haltezapfen 60 erstrecken sich senkrecht zur Ebene E der Membranplatte 30 und werden in Bohrungen 15 eingesetzt. Auf der linken Seite der Figur 7 ist der Haltezapfen 60 in eingebautem Zustand dargestellt und es ist zu sehen, dass die Breite der Hinterschneidung 64 auf die Dicke D des Filterelementes 50 abgestimmt ist, so dass dieses den kegelstumpfförmigen Abschnitt 62 hintergreifen kann und dort fixiert wird.

In der Figur 8 ist eine Filterplatte 40 dargestellt, die in gleicher Weise ausgebildet ist wie die Membranplatte 30 und ebenfalls Halteelemente 60 aufweist, die beabstandet zum Rand 45 angeordnet sind. Auch hier ist eine Ringnut 46 vorgesehen, in der das Filterelement 50 endet. Die Ausgestaltung der Ringnut 46 entspricht der der Ringnut 36. Ferner sind Augen 48 mit Ringwülsten 49 vorgesehen, die entsprechend den Ringwülsten 39 mit einer Hinterschneidung versehen sind.

Wie in Figur 9 dargestellt ist, sind die Halteelemente 60 ebenfalls an beiden Seitenflächen 42a, 42b des Grundkörpers 40a angeordnet. Die Halteelemente 60 werden ebenfalls in Bohrungen 15 des Grundkörpers 40a eingesetzt.

Zwischen den Filterelementen 50 und dem mit Noppen 44 versehenen Bereich des Grundkörpers 40a wird ein Filtratraum 12 ausgebildet. Das Filterelement 50 steht - wie bei der Membranplatte 30 - geringfügig gegenüber der Ebene E' vor.

In der Figur 10 ist ein Filterrahmen 20 mit Rand 25 dargestellt, der in der Seitenfläche 22a eine Reihe von Löchern 23 aufweist, in die die Halteelemente 60 beim Zusammenbau beidseitig eingreifen können (s. auch Figur 3).

Figur 11 zeigt eine vergrößerte Darstellung der linken unteren Ecke mit Auge 28 und zwei Löchern 23.

### Bezugszeichenliste

- 1: Filterpresse
- 2: Gestell
- 3a,b: Gestellplatte
- 4: Auflagebalken
- 5: Anschluss
- 7: Druckluftschlauch
- 7': Druckluftanschluss
- 8: Stange
- 9: Plattenanordnung
- 10: Filtratraum (Membranplatte)
- 12: Filtratraum (Filterplatte)
- 15: Bohrung

- 20: Filterrahmen
- 21: Haltenase
- 22a,b: Seitenfläche des Filterrahmens
- 23: Loch
- 25: Rand
- 26: Unfiltratraum
- 28: Auge

- 30: Membranplatte
- 30a: Grundkörper
- 30b: Randfläche
- 31: Haltenase
- 32a,b: Seitenfläche der Membranplatte
- 33a,b: Membran
- 34: Noppen
- 35: Rand
- 36: Ringnut
- 37: Ausnehmung
- 38: Auge
- 39: Ringwulst

- 40: Filterplatte
- 40a: Grundkörper
- 40b: Randfläche
- 41: Haltenase
- 42a,b: Seitenfläche der Filterplatte
- 44: Noppen
- 45: Rand
- 46: Ringnut
- 48: Auge
- 49: Ringwulst

- 50: Filterelement
- 52: Loch
- 54: Loch
- 55: Rand

- 60: Halteelement, Haltezapfen
- 62: kegelstumpfförmiger Abschnitt
- 64: Hinterschneidung

- E: Plattenebene Membranplatte
- E': Plattenebene Filterplatte

- D: Dicke des Filterelementes

## Patentansprüche

1. Membranplatte (30) für eine Filterpresse (1), wobei die Membranplatte (30) einen Grundkörper (30a) mit zwei Seitenflächen (32a, 32b) und einen Rand (35) aufweist, wobei auf dem Grundkörper (30a) beidseitig eine Membran (33a, 33b) aus einem flexiblen Material angeordnet ist, **dadurch gekennzeichnet,**
**dass** die Membranplatte (30) auf den beiden Seitenflächen (32a, 32b) über der Membran (33a, 33b) jeweils mit einem Filterelement (50) bestückt ist, wobei die Membranplatte (30) beabstandet zum Rand (35) Halteelemente (60) aufweist, an denen die Filterelemente (50) lösbar befestigt sind, wobei die Halteelemente (60) unmittelbar am Grundkörper (30a) befestigt sind.

2. Platte nach Anspruch 1, **dadurch gekennzeichnet,**
**dass** die Halteelemente (60) gegenüber der Seitenfläche (32a, 32b) des Grundkörpers (30a) der Platte (30) vorstehen.

3. Platte nach einem der Ansprüche 1 oder 2, **dadurch gekennzeichnet, dass** sich die Halteelemente (60) senkrecht zur Ebene E, E' der Platte (30) erstrecken.

4. Filterplatte (40) für eine Filterpresse (1), wobei die Filterplatte (40) einen Grundkörper (40a) mit zwei Seitenflächen (42a, 42b) und einem Rand (45) aufweist, wobei auf dem Grundkörper (40a) beidseitig jeweils ein Filterelement (50) angeordnet ist, **dadurch gekennzeichnet,**
**dass** die Filterplatte (40) beabstandet zum Rand (45) Halteelemente (60) aufweist, an denen die Filterelemente (50) lösbar befestigt sind, wobei die Halteelemente (60) unmittelbar am Grundkörper (40a) befestigt sind und gegenüber der Seitenfläche (42a, 42b) des Grundkörpers (40a) der Platte (40) vorstehen und wobei sich die Halteelemente (60) senkrecht zur Ebene E, E' der Platte (40) erstrecken und wobei die Ebenen E, E' in den Seitenflächen (42a, 42b) des Grundkörpers (40a) liegen, die sich an den Rand (45) der Platte (40) anschließen.

5. Platte nach einem der Ansprüche 1 bis 4, **dadurch gekennzeichnet, dass** das Filterelement (50) ein Filtertuch ist.

6. Platte nach einem der Ansprüche 1 bis 5, **dadurch gekennzeichnet, dass** die Filterelemente (50) Löcher (52) aufweisen, in die die Halteelemente (60) einsteckbar sind.

7. Platte nach Anspruch 5 oder 6, **dadurch gekennzeichnet,**
**dass** die Halteelemente (60) Haltezapfen sind.

8. Platte nach Anspruch 7, **dadurch gekennzeichnet,**
**dass** der Haltezapfen (60) einen kegelstumpfförmigen Abschnitt (62) aufweist.

9. Platte nach einem der Ansprüche 7 oder 8, **dadurch gekennzeichnet, dass** am Haltezapfen (60) zwischen dem kegelstumpfförmigen Abschnitt (62) und der Seitenfläche (32a. 32b, 42a, 42b) des Grundkörpers (30a, 40a) der Platte (30, 40) eine Hinterschneidung (64) vorgesehen ist.

10. Platte nach einem der Ansprüche 1 bis 9, **dadurch gekennzeichnet, dass** der Zuschnitt der Filterelemente (50) kleiner ist als die Plattenabmessungen, so dass der Rand (55) der Filterelemente (50) gegenüber dem Rand (35, 45) der Platten (30, 40) zurückversetzt angeordnet ist.

11. Platte nach einem der Ansprüche 1 bis 10, **dadurch gekennzeichnet, dass** die Grundkörper (30a, 40a) der Platten (30, 40) in den Seitenflächen (32a, 32b, 42a, 42b) eine umlaufende Ringnut (36, 46) aufweisen.

12. Platte nach Anspruch 11, **dadurch gekennzeichnet,**
**dass** das Filterelement (50) derart dimensioniert ist, dass der Rand (55) des Filterelementes (50) in der Ringnut (36, 46) liegt.

13. Filterpresse für Flüssigkeit mit einer Mehrzahl von parallel zueinander angeordneten Filterplatten (40), Filterrahmen (20), Membranplatten (30) und Filterelementen (50), **dadurch gekennzeichnet,**
**dass** die Filterplatten (40) und die Membranplatten (30) beidseitig mit den Filterelementen (50) bestückt sind, wobei die Platten (30, 40) jeweils einen Grundkörper (30a, 40a) aufweisen, an dem unmittelbar und beabstandet zum Rand (35, 45) Halteelemente (60) befestigt sind, an denen die Filterelemente (50) lösbar befestigt sind und gegenüber der Seitenfläche (32a, 32b, 42a, 42b) des Grundkörpers (30a, 40a) der Platte (30, 40) vorstehen und wobei sich die Halteelemente (60) senkrecht zur Ebene E, E' der Platte (30, 40) erstrecken und wobei die Ebenen E, E' in den Seitenflächen (32a, 32b, 42a, 42b) des Grundkörpers (30a, 40a) liegen, die sich an den Rand (35, 45) der Platte (30, 40) anschließen.

14. Filterpresse nach Anspruch 13, **dadurch gekennzeichnet,**
**dass** die Filterrahmen (20) beabstandet zum Rand Löcher (23) aufweisen.

15. Verwendung einer Filterpresse nach Anspruch 13 für die Filtration von Blutplasma und für die Herstellung pharmazeutischer Produkte.

## Claims

1. Membrane plate (30) for a filter press (1), wherein the membrane plate (30) has a base member (30a) having two side faces (32a, 32b) and an edge (35), wherein a membrane (33a, 33b) of a flexible material is arranged on the base member (30a) at both sides, **characterised in that**
the membrane plate (30) is provided on both side faces (32a, 32b) over the membrane (33a, 33b) with a filter element (50), wherein the membrane plate (30) has with spacing from the edge (35) retention elements (60) to which the filter elements (50) are releasably secured, wherein the retention elements (60) are secured directly to the base member (30a).

2. Plate according to claim 1, **characterised in that** the retention elements (60) protrude with respect to the side face (32a, 32b) of the base member (30a) of the plate (30).

3. Plate according to either claim 1 or claim 2, **characterised in that**
the retention elements (60) extend perpendicularly to the plane E, E' of the plate (30).

4. Filter plate (40) for a filter press (1), wherein the filter plate (40) has a base member (40a) having two side faces (42a, 42b) and an edge (45), wherein a filter element (50) is arranged on the base member (40a) at both sides, **characterised in that**
the filter plate (40) has with spacing from the edge (45) retention elements (60) to which the filter elements (50) are releasably secured, wherein the retention elements (60) are secured directly to the base member (40a) and protrude with respect to the side face (42a, 42b) of the base member (40a) of the plate (40), and wherein the retention elements (60) extend perpendicularly to the plane E, E' of the plate (40), and wherein the planes E, E' are located in the side faces (42a, 42b) of the base member (40a), which adjoin the edge (45) of the plate (40).

5. Plate according to any one of claims 1 to 4, **characterised in that**
the filter element (50) is a filter cloth.

6. Plate according to any one of claims 1 to 5, **characterised in that**
the filter elements (50) have holes (52) in which the retention elements (60) can be inserted.

7. Plate according to claim 5 or 6, **characterised in that** the retention elements (60) are retention pins.

8. Plate according to claim 7, **characterised in that** the retention pin (60) has a frustoconical portion (62).

9. Plate according to either claim 7 or claim 8, **characterised in that**
an undercut (64) is provided on the retention pin (60) between the frustoconical portion (62) and the side face (32a, 32b, 42a, 42b) of the base member (30a, 40a) of the plate (30, 40) .

10. Plate according to any one of claims 1 to 9, **characterised in that**
the blank of the filter elements (50) is smaller than the plate dimensions so that the edge (55) of the filter elements (50) is arranged so as to be recessed with respect to the edge (35, 45) of the plates (30, 40).

11. Plate according to any one of claims 1 to 10, **characterised in that**
the base members (30a, 40a) of the plates (30, 40) have in the side faces (32a, 32b, 42a, 42b) a peripheral annular groove (36, 46).

12. Plate according to claim 11, **characterised in that** the filter element (50) is sized in such a manner that the edge (55) of the filter element (50) is located in the annular groove (36, 46).

13. Filter press for fluid having a plurality of filter plates (40), filter frames (20), membrane plates (30) and filter elements (50) which are arranged parallel with each other, **characterised in that**
the filter plates (40) and the membrane plates (30) are provided at both sides with the filter elements (50), wherein the plates (30, 40) each have a base member (30a, 40a), to which there are secured directly and with spacing from the edge (35, 45) retention elements (60) to which the filter elements (50) are releasably secured and protrude with respect to the side face (32a, 32b, 42a, 42b) of the base member (30a, 40a) of the plate (30, 40), and wherein the retention elements (60) extend perpendicularly to the plane E, E' of the plate (30, 40), and wherein the planes E, E' are located in the side faces (32a, 32b, 42a, 42b) of the base member (30a, 40a) which adjoin the edge (35, 45) of the plate (30, 40).

14. Filter press according to claim 13, **characterised in that** the filter frames (20) have holes (23) with spacing from the edge.

15. Use of a filter press according to claim 13 for filtration of blood plasma and for the production of pharmaceutical products.

## Revendications

1. Plaque (30) à membranes destinée à un filtre-presse (1), ladite plaque (30) à membranes étant munie d'un corps de base (30a) comportant deux surfaces latérales (32a, 32b) et un rebord (35), une membrane (33a, 33b) en un matériau flexible étant disposée, de part et d'autre, sur ledit corps de base (30a), **caractérisée par le fait que** la plaque (30) à membranes est garnie d'un élément filtrant respectif (50) sur les deux surfaces latérales (32a, 32b), au-dessus de la membrane (33a, 33b), ladite plaque (30) à membranes étant pourvue, à distance du rebord (35), d'éléments de maintien (60) auxquels les éléments filtrants (50) sont fixés de manière libérable, lesquels éléments de maintien (60) sont directement fixés au corps de base (30a).

2. Plaque selon la revendication 1, **caractérisée par le fait que** les éléments de maintien (60) sont en saillie par rapport à la surface latérale (32a, 32b) du corps de base (30a) de ladite plaque (30).

3. Plaque selon l'une des revendications 1 ou 2, **caractérisée par le fait que** les éléments de maintien (60) s'étendent perpendiculairement au plan E-E' de ladite plaque (30).

4. Plaque filtrante (40) destinée à un filtre-presse (1), ladite plaque filtrante (40) étant munie d'un corps de base (40a) comportant deux surfaces latérales (42a, 42b) et un rebord (45), un élément filtrant respectif (50) étant disposé, de part et d'autre, sur ledit corps de base (40a), **caractérisée par le fait**
**que** la plaque filtrante (40) est pourvue, à distance du rebord (45), d'éléments de maintien (60) auxquels les éléments filtrants (50) sont fixés de manière libérable, sachant que lesdits éléments de maintien (60) sont directement fixés au corps de base (40a) et sont en saillie par rapport à la surface latérale (42a, 42b) dudit corps de base (40a), et sachant que lesdits éléments de maintien (60) s'étendent perpendiculairement au plan E-E' de ladite plaque (40), les plans E-E' étant situés dans les surfaces latérales (42a, 42b) dudit corps de base (40a) se rattachant au rebord (45) de ladite plaque (40).

5. Plaque selon l'une des revendications 1 à 4, **caractérisée par le fait que** l'élément filtrant (50) est une toile filtrante.

6. Plaque selon l'une des revendications 1 à 5, **caractérisée par le fait que** les éléments filtrants (50) sont percés de trous (52) dans lesquels les éléments de maintien (60) peuvent être emboîtés.

7. Plaque selon la revendication 5 ou 6, **caractérisée par le fait que** les éléments de maintien (60) sont des tenons de maintien.

8. Plaque selon la revendication 7, **caractérisée par le fait que** le tenon de maintien (60) est pourvu d'une région tronconique (62).

9. Plaque selon l'une des revendications 7 ou 8, **caractérisée par le fait qu'**une contre-dépouille (64) est prévue, sur le tenon de maintien (60), entre la région tronconique (62) et la surface latérale (32a, 32b, 42a, 42b) du corps de base (30a, 40a) de ladite plaque (30, 40).

10. Plaque selon l'une des revendications 1 à 9, **caractérisée par le fait que** le profil de découpe des éléments filtrants (50) est plus petit que les cotes de ladite plaque, de telle sorte que le bord (55) desdits éléments filtrants (50) soit disposé en retrait par rapport au rebord (35, 45) des plaques (30, 40).

11. Plaque selon l'une des revendications 1 à 10, **caractérisée par le fait que** les corps de base (30a, 40a) des plaques (30, 40) sont dotés d'une rainure annulaire périphérique (36, 46) dans les surfaces latérales (32a, 32b, 42a, 42b).

12. Plaque selon la revendication 11, **caractérisée par le fait que** l'élément filtrant (50) est dimensionné de façon telle que le bord (55) dudit élément filtrant (50) soit logé dans la rainure annulaire (36, 46).

13. Filtre-presse dévolu à un liquide, doté d'une pluralité de plaques filtrantes (40), de châssis de filtration (20), de plaques (30) à membranes et d'éléments filtrants (50) agencés parallèlement les uns aux autres, **caractérisé par le fait**
**que** les plaques filtrantes (40) et les plaques (30) à membranes sont garnies des éléments filtrants (50), de part et d'autre, lesdites plaques (30, 40) étant munies d'un corps de base respectif (30a, 40a) auquel sont fixés, directement et à distance du rebord (35, 45), des éléments de maintien (60) auxquels lesdits éléments filtrants (50) sont fixés de manière libérable et sont en saillie par rapport à la surface latérale (32a, 32b, 42a, 42b) du corps de base (30a, 40a) de la plaque (30, 40), sachant que lesdits éléments de maintien (60) s'étendent perpendiculairement au plan E-E' de ladite plaque (30, 40), les plans E-E' étant situés dans les surfaces latérales (32a, 32b, 42a, 42b) dudit corps de base (30a, 40a) se rattachant au rebord (35, 45) de ladite plaque (30, 40).

14. Filtre-presse selon la revendication 13, **caractérisé par le fait que** les châssis de filtration (20) sont percés de trous (23) à distance du rebord.

15. Utilisation d'un filtre-presse conforme à la revendication 13, pour la filtration de plasma sanguin et pour la fabrication de produits pharmaceutiques.
